Europäisches Patentamt

European Patent Office

Office européen des brevets

(11) Publication number: **0 047 801**
**B1**

# EUROPEAN PATENT SPECIFICATION

(45) Date of publication of patent specification: 02.05.85

(51) Int. Cl.⁴: **A 23 L 1/185,** A 23 L 1/20

(21) Application number: **80107502.9**

(22) Date of filing: **01.12.80**

(54) **Method of preparing albumin rich foodstuff raw materials.**

(30) Priority: **12.09.80 JP 126710/80**

(43) Date of publication of application:
**24.03.82 Bulletin 82/12**

(45) Publication of the grant of the patent:
**02.05.85 Bulletin 85/18**

(84) Designated Contracting States:
**AT BE CH DE FR GB IT LI LU NL SE**

(56) References cited:
US-A- 531 013
US-A-3 124 465
US-A-4 117 169
US-A-4 140 802

JAPANESE PATENTS GAZETTE, Part I
Chemical, Week X24, Section D, no. 44615X/24,
21st July 1976, Derwent Publications Ltd.,

The file contains technical information
submitted after the application was filed and
not included in this specification

(73) Proprietor: **NAGANO MISO KABUSHIKI KAISHA**
**3-9-29 Tenjin**
**Ueda-shi Nagano-ken (JP)**

(72) Inventor: **Oka, Hideki**
**5-6-2, Chuo**
**Ueda-shi Nagano-ken (JP)**

(74) Representative: **von Füner, Alexander, Dr. et al**
**Patentanwälte v. Füner, Ebbinghaus, Finck**
**Mariahilfplatz 2 & 3**
**D-8000 München 90 (DE)**

(56) References cited:

JAPANESE PATENTS GAZETTE, Section CH:
Chemical Week Y36, Section D, no. 64169Y/36,
17th October 1977, Derwent Publication Ltd.,

CHEMICAL ABSTRACTS, vol. 93, no. 5, 4th
August 1980, page 739, no. 44326K, Columbus
Ohio (USA); NAGASE ICHIRO et al.: "Miso
making with use of kelp and Job's tears"

Courier Press, Leamington Spa, England.

**0 047 801**

**Description**

*Technical field*

This invention relates to a method of preparing albumin rich foodstuff raw material consisting essentially of beans, seaweeds, algae or other vegetable-albumin rich substances and not containing salt.

*Background of the Invention*

Like meat, as a source of animal-albumin, beans, seaweeds, algae, etc. are important foodstuffs as a source of supplying vegetable-albumin to human bodies. "Miso", a product of soya beans is an important foodstuff for Japanese. However, due to recent change in social life, especially due to decrease in hard labor, the quantity of salt requested by human bodies is now decreasing. Too much salt affects the health (causing high blood pressure, kidney disease, etc.) so that it is necessary to limit the quantity of salt taken into human bodies. For this reason, it has been tried to develop foodstuffs containing no or only little salt.

*Prior art*

A paper of H. Iwashita et al of Miso Technique No. 86 issued on April 16, 1961 discloses a method in which a mixture of boiled or steamed soya beans and rice malt is maintained at a temperature of from 45 to 55°C for 24—36 hours, then 3—5% by weight of 95% ethyl alcohol is incorporated at a temperature of about 40°C. Thereafter, the mixture is let stand still at room temperature for about one week to improve flavor and taste and to age the mixture. When miso is prepared according to this method, acidification caused by usual live fungus, for example lactic acid bacilli and aerotropic decomposive bacteria can be prevented by temperature control. However such control device is bulky and expensive. Furthermore, according to this method, the mixture of the boiled or steamed soya beans and the rice malt is semisolid, and moreover since the quantity of ethyl alcohol incorporated is extremely small, not only the mixing step is difficult to perform but also it is almost impossible to obtain a homogeneous mixture.

Japanese laid open patent specification No. 48498 of 1976 discloses a method of preparing soya bean miso in which all or a portion of the salt incorporated into a mixture of steamed or boiled soya beans is substituted by less than 100% by volume or preferably less than 5% by volume of alcohol for the purpose of preparing soya bean miso not containing or containing but a small quantity of salt. Although this method is more advantageous than the first mentioned method in that there is no difficulty of temperature control and incorporation of alcohol, where rice malt or wheat malt is used, substitution of alcohol of less than 5% by volume makes it difficult to suppress the adverse effect of the lactic acid bacilli or the like thus resulting in acidification. Consequently it is difficult to determine the optimum aging interval. Even when the quantity of alcohol is increased beyond 5% by volume it is impossible to sufficiently suppress the adverse effect of the lactic acid bacilli, etc. When the quantity of alcohol approaches 10% by volume, the flavor of alcohol becomes remarkable, thus degrading the quality of the product.

*Aim of the invention*

Accordingly, it is the principal object of this invention to provide a novel method of preparing albumin rich foodstuff raw material not containing salt, which is inexpensive and can be used for a number of purposes.

*Object of the invention*

We have found that the difficulties of the prior art methods can be eliminated by a novel method comprising the steps of immersing grain malts in ethyl alcohol or an aqueous solution thereof having a concentration of at least 15% alcohol, mixing the sterilized malt with the steamed or boiled vegetable-albumin rich substances, adding an additional quantity of ethyl alcohol to form a mixture containing said ethyl alcohol present in that mixture in an amount less than 5% by weight based on the combined weight of the malt and the vegetable-albumin rich substances and aging the resulting mixture. The semi-solid, paste like or rice-gruel like albumin rich foodstuff raw material prepared by this method can be pulverized after drying.

According to a preferred embodiment, the aging is carried out at a temperatrue of from 20 to 50°C.

According to a further embodiment of the invention, the additional quantity of ethyl alcohol or an aqueous solution thereof is incorporated when malt and steamed vegetable-albumin rich substances are mixed together.

Finally, according to another embodiment, ethyl alcohol or an aqueous solution thereof is incorporated into the malt.

According to the present invention, albumin rich foodstuff raw materials are made from grain malts and vegetable-albumin rich substances such as beans, seaweeds, algae, etc.

As beans, soya beans, adzuki beans, kidney beans, peas, cowpeas, fava beans, winged beans, etc. can be used.

As seaweeds, several kinds of lavers can be used.

As algae, chlorella, spirulina and so on can be used.

Grain malt is sterilized by ethyl alcohol or its solution. The ethyl alcohol utilized in this invention is a

2

**0 047 801**

commercially available alcohol suitable to be added to foodstuffs, and the aqueous solution of the alcohol is prepared by diluting it with drinking water.

The concentration of the aqueous solution of alcohol suitable for the method of this invention is that of 15% alcohol containing remaining fungus of about 2 to 4% as shown in the following Table I.

3

TABLE I

Number of funguses in rice malt after immersion in an aqueous solution of alcohol

| | immersed for 15 min. | | immersed for 30 min. | | immersed for 60 min. | |
|---|---|---|---|---|---|---|
| | number of general live funguses | number of live funguses | number of general live funguses | number of live funguses | number of general live funguses | number of live funguses |
| not immersed | $4.2 \times 10^5$ 100% | $2.7 \times 10^5$ 100% | $4.2 \times 10^5$ 100% | $2.7 \times 10^5$ 100% | $4.2 \times 10^5$ 100% | $2.7 \times 10^5$ 100% |
| immersed in 93.5% by weight of alcohol aqueous solution | $5.9 \times 10^2$ 0.14% | $4.4 \times 10^2$ 0.16% | $6.5 \times 10^2$ 0.15% | $3.3 \times 10^2$ 0.12% | $5.4 \times 10^2$ 0.13% | $4.3 \times 10^2$ 0.16% |
| immersed in 75% by weight of alcohol aqueous solution | $5.8 \times 10^2$ 0.14% | $4.6 \times 10^2$ 0.17% | $5.2 \times 10^2$ 0.12% | $4.4 \times 10^2$ 0.16% | $5.8 \times 10^2$ 0.14% | $3.8 \times 10^2$ 0.14% |
| immersed in 55% by weight of alcohol aqueous solution | $3.9 \times 10^2$ 0.09% | $3.0 \times 10^2$ 0.11% | $3.7 \times 10^2$ 0.09% | $2.8 \times 10^2$ 0.10% | $3.7 \times 10^2$ 0.09% | $3.0 \times 10^2$ 0.11% |
| immersed in 35% by weight of alcohol aqueous solution | $1.1 \times 10^3$ 0.26% | $8.8 \times 10^2$ 0.33% | $8.6 \times 10^2$ 0.20% | $5.5 \times 10^2$ 0.20% | $8.0 \times 10^2$ 0.19% | $5.8 \times 10^2$ 0.21% |
| immersed in 15% by weight of alcohol aqueous solution | $1.5 \times 10^4$ 3.57% | $9.2 \times 10^3$ 3.41% | $9.2 \times 10^3$ 2.19% | $6.6 \times 10^3$ 2.44% | $7.8 \times 10^3$ 1.86% | $5.0 \times 10^3$ 1.85% |

Remarks: (a) in each case 100 g of rice malt was immersed in 150 ml of an aqueous solution of alcohol.

(b) method of measuring the number of live funguses

measurement of the number — cultivated with flat plate of Japanese isinglass
of general live funguses    (standard Japanese isinglass cultivation base, 48 hours).

measurement of the number — cultivated with flat plates of Japanese isinglass
of live funguses    (standard Japanese isinglass cultivation base + calcium carbonate + cabisizin (Registered Trade mark) 96 hours).

cultivation temp.    — all 350°C.

0 047 801

Since the vegetable-albumin rich substances utilized in this invention are heat sterilized at the time of steaming, only the fungus originating from the malt causes acidification. As can be noted from Table I, as a result of immersion of the malt in alcohol or an aqueous solution thereof almost all of the funguses in the malt would be sterilized, thus making it possible to prepare albumin rich foodstuff raw material by the decomposition of the albumin without the necessity of suppressing growth of funguses with salt.

It was found that immersion of the malt in alcohol or an aqueous solution thereof does not deactivate enzymes in the malt to any appreciable extent. Especially, where a 75% alcohol aqueous solution is used no deactivation was noted as shown by the result of the experiment shown in the following Table II.

TABLE II

| | Protease | | |
|---|---|---|---|
| | pH 3.0 | pH 6.0 | pH 7.5 |
| not immersed | 105.4 (100%) | 83.1 (100%) | 5.0 (100%) |
| immersed in 93.5% alcohol aqueous solution for 60 min. | 97.5 (93%) | 75.2 (91%) | 4.6 (92%) |
| immersed in 75% alcohol aqueous solution for 60 min. | 107.5 (102%) | 84.4 (102%) | 4.3 (86%) |
| immersed in 55% alcohol aqueous solution for 60 min. | 90.3 (86%) | 75.2 (91%) | 4.5 (90%) |
| immersed in 35% alcohol aqueous solution for 60 min. | 70.0 (66%) | 60.8 (73%) | 4.5 (90%) |
| immersed in 15% alcohol aqueous solution for 60 min. | 75.8 (72%) | 67.6 (81%) | 3.8 (76%) |

Immersion for about 15 minutes of the malt in alcohol or an aqueous solution thereof at room temperature is sufficient as can be noted from Table I. It is advantageous to admix the malt with albumin rich substances after taking out the malt from alcohol or an aqueous solution thereof.

Where alcohol or its aqueous solution is incorporated into the malt it is advantageous to admix it with albumin rich substances after sterilization without separating alcohol.

It is advantageous to mix together sterilized malt and steamed or boiled albumin rich substances at a temperature of from 30°C to 40°C.

The malt utilized in this invention is selected from the group consisting of rice malt, wheat malt, bean malt and malts of albumious substances depending upon the intended use of the albumin rich foodstuffs raw material free from salt.

In practice, it is advantageous to perform the aging step of this invention at a temperature preferably between 30°C and 40°C. Although the aging period is determined depending upon the aging temperature and the quantity of the malt used, a concrete aging period should, however, be determined in accordance with the intended use of the resulting foodstuff. When one considers the percentage of decomposition, more than one week or at least 10 days is sufficient.

The albumin rich foodstuff raw material of this invention obtained after aging can be used in many fields of application. For example, the foodstuff raw material in the form of a semisolid, a paste or a rice gruel can be suitably added to an ordinary miso to prepare miso containing a small quantity of salt, or to prepare a raw material of mayonnaise and sauce. It can also be used to prepare a spread by admixing it with butter or cheese or as raw materials to prepare soup, confectionery, bread, biscuit, etc.

To have better understanding of the invention some typical examples of the method of this invention will now be described as follows.

### Example 1

60 kg of rice malt dried for 20 hours at room temperature and having a water content of 20% was dipped for 30 minutes in 6 l of 93.5% ethyl alcohol (suitable for incorporation into foodstuffs). Then, the malt was taken out of the alcohol at which time the alcohol content of the malt was about 20% by weight. 40 kg of soya beans which had been cooled to a temperature of about 45°C after boiling or steaming was put into a stainless container having a capicity of 200 l and equipped with an agitator. After adding 1.1 kg of the ethyl alcohol the mixture in the container was admixed. At the end of this step, the temperature of the mixture was 40°C.

Thereafter the mixture was transferred into a polyvinyl chloride container having a capacity of 80 l, and maintained in a constant temperature room to effect aging.

The alcohol content, holmol nitrogen content, pH value, color, etc. of the aged mixture were tested and its various characteristics were also tested respectively 0, 5, 10 and 20 days after initiating the aging step and the results are shown in the following Table III. The control example (a) was prepared in the same manner as this Example 1 except that the rice malt was not sterilized by immersing it in alcohol but 2.5 kg of the alcohol was added at the commencement of the aging (see Japanese laid open patent specification No. 48 498/1976 referred to above).

### Example 2

The same process as in Example 1 was repeated except that the temperature of the boiled or steamed soya beans was changed to about 35°C and that the temperature of the constant temperature room was held at 30°C during the aging. The temperature of the contents in the aging container was 30°C. The same test and measurement as in Example 1 were made and results are also shown in Table III in which the control example (b) was prepared in the same manner as the control example (a).

TABLE III

| number of aging days | sample | water content (%) | alcohol (%) | holmol nitrogen (%) | pH | color measured Y % | x | y | Characteristics |
|---|---|---|---|---|---|---|---|---|---|
| 0 | a | 56.8 | 3.2 | | 6.23 | 24.3 | 0.398 | 0.390 | |
| | b | 57.3 | 3.0 | | 6.24 | 26.5 | 0.395 | 0.384 | |
| | 1 | 57.3 | 3.0 | | 6.30 | 25.0 | 0.399 | 0.384 | |
| | 2 | 56.2 | 3.2 | | 6.24 | 26.4 | 0.399 | 0.394 | |
| 5 | a | | 3.0 | 0.28 | 6.00 | 21.8 | 0.405 | 0.392 | a little better |
| | b | | 3.1 | 0.25 | 6.02 | 22.4 | 0.401 | 0.386 | acidic, a little acidic flavor |
| | 1 | | 3.0 | 0.21 | 6.00 | 21.8 | 0.404 | 0.393 | a little bitter |
| | 2 | | 3.1 | 0.18 | 6.10 | 22.3 | 0.398 | 0.383 | not aged, not yet aged flavor |
| 10 | a | | 2.7 | 0.61 | 5.71 | 20.9 | 0.409 | 0.392 | acidic, a little acidic flavor |
| | b | | 2.9 | 0.58 | 5.54 | 21.6 | 0.407 | 0.392 | acidified |
| | 1 | | 2.8 | 0.51 | 5.98 | 20.9 | 0.414 | 0.396 | good taste, a little bitter |
| | 2 | | 2.8 | 0.48 | 6.01 | 21.0 | 0.400 | 0.389 | a little flavor of not aged product |
| 20 | a | | 2.9 | 0.71 | 5.02 | 20.2 | 0.410 | 0.394 | acidified |
| | b | | 2.8 | 0.74 | 4.41 | 21.1 | 0.410 | 0.394 | acidified |
| | 1 | | 2.9 | 0.67 | 5.51 | 17.9 | 0.420 | 0.400 | excellent taste |
| | 2 | | 2.9 | 0.65 | 5.60 | 19.8 | 0.422 | 0.398 | has an appreciable taste, excellent |

0 047 801

The method of testing was as follows:

| | |
|---|---|
| water content | drying under a reduced pressure |
| alcohol content | gas chromatography technique |
| holmol nitrogen | standard method of analyzing miso |
| pH | measured without dilution |
| color measurement | photoelectric reflection meter made by Hitachi Seisakusho Type ERI—2 |

As can be noted from Table III, during the characteristic test the control samples (a) and (b) were acidified the fifth and 10th days respectively. Both samples 1 and 2 showed favorable aging characteristics. Especially the sample 1 showed excellent taste the 20th day. Although sample 1 was not yet completely aged the 10th day but the 20th day it showed stable taste and excellent color.

As above described in the cases of control samples (a) and (b) it was considered that live acid fungus became active regardless of the mixing temperature and the aging temperature. In the samples 1 and 2 of this invention it is to be noted that no acidification occurred under the same temperature condition.

In samples 1 and 2 the amount of the holmol nitrogen were respectively 0.67% and 0.65% after aging for 20 days, which shows that the percentage of decomposition of albumin is high considering the fact that the quantity of the holmol nitrogen of ordinary miso is about 0.45%.

The albumin rich foodstuff raw material prepared by the process of Example 1 and not containing any salt was analyzed and found to have the following nutrient components (a) vitamin $B_1$—0.17 mg%, vitamin $B_2$—0.22 mg%, water content—1.5% (measured by drying method under reduced pressure), albumin—31.8% (coefficient 5.71), oil—17.9% (Soxhlet extraction method), fiber—4.0%, ash—3.5%, sugar—41.5%, salt (as NaCl)—68.9 mg%, calcium 257 mg% (b) 100 g of a powder of the albumin rich foodstuff raw material not containing salt was used. Its calorie value 445 was calculated based on the following values: albumin—3.47, oil 8.37, fiber and sugar 4.07.

Example 3

3 kg of rice malt was dipped for one hour in 3 l of 93.5% alcohol which was suitable to prepare foodstuffs and then taken out of the alcohol. The alcohol content of the malt thus treated was about 20% by weight. 15 kg of soya beans which had been cooled to 35°C after boiling or steaming was put in a steel container having a volume of 100 l and provided with an agitator together with the malt dipped in alcohol and mixed together. The temperature of the mixture at the start of the mixing operation was 30°C.

After completion of the mixing operation the mixture was transferred into a polyvinyl chloride container having a volume of 20 l and maintained in a constant temperature room held at 30°C thus causing the mixture to age. The water content, pH value, alcohol content, color, number of live funguses, the percentage of dissolved nitrogen, the percentage of nitrogen decomposition of the aged mixture were measured and its various characteristics were also determined after 0, 4, 11, 20 and 37 days, and the results are shown in the following Table IV.

Example 4

The same process steps as in Example 3 were repeated except that 0.3 l of 93.5% alcohol was added at the time of admixing. The results of measurement regarding aged material are also shown in Table IV.

Example 5

Again the process steps of Example 3 were repeated except that 0.2 l of 93.5% alcohol was added to the boiled or steamed soya beans and that 0.3 l of 93.5% alcohol was incorporated at the time of mixing, and the results are also shown in the same table.

Example 6

1.0 l of 93.5% alcohol was sprinkled on 3 kg of rice malt and admixed therewith. After standstill for 30 minutes, 15 kg of soya beans which had been boiled or steamed and then cooled to a temperature of about 35°C was put in a steel container provided with an agitator and having a capacity of 100 l, and then the rice malt was added and admixed with the soya beans. The aged product was tested in the same manner as in Example 3, and the results are shown in the following Table IV.

Control sample (C)

The process steps of Example 3 were repeated except that the alcohol treatment of the rice malt was not performed and that 1.0 l of 93.5% alcohol was incorporated at the time of admixing the ingredients. The aged product was tested in the same manner as in Example 3 and the results are also shown in the following Table IV.

TABLE IV

| aging days | example No. | water content (%) | pH | alcohol (%) | color measured | | | general live funguses | live acidic fungus | percentage of dissolved nitrogen | percentage of decomposed nitrogen | characteristics |
|---|---|---|---|---|---|---|---|---|---|---|---|---|
| | | | | | Y% | x | y | | | | | |
| 0 | control example (C) | 53.0 | 6.31 | 4.01 | 34.1 | 0.388 | 0.386 | $3.9 \times 10^6$ | $3.1 \times 10^6$ | | | |
| | 3 | 51.7 | 6.31 | 3.84 | 32.9 | 0.393 | 0.398 | $6.6 \times 10^4$ | $3.7 \times 10^4$ | | | |
| | 4 | 52.7 | 6.31 | 4.49 | 33.8 | 0.387 | 0.390 | $8.5 \times 10^4$ | $3.1 \times 10^4$ | | | |
| | 5 | 50.4 | 6.27 | 5.56 | 33.5 | 0.386 | 0.390 | $5.6 \times 10^4$ | $5.2 \times 10^4$ | | | |
| | 6 | 51.7 | 6.25 | 3.92 | 33.2 | 0.390 | 0.396 | $6.1 \times 10^4$ | $3.7 \times 10^4$ | | | |
| 4 | control example (C) | 52.0 | 5.93 | 3.72 | 29.7 | 0.393 | 0.399 | | | | | |
| | 3 | 51.0 | 5.92 | 3.70 | 30.3 | 0.392 | 0.398 | | | | | |
| | 4 | 52.0 | 5.01 | 4.62 | 32.2 | 0.392 | 0.391 | | | | | |
| | 5 | 49.7 | 5.96 | 5.41 | 30.5 | 0.392 | 0.396 | | | | | |
| | 6 | 52.0 | 5.97 | 3.90 | 30.7 | 0.395 | 0.396 | | | | | |
| 11 | control example (C) | 51.3 | 4.57 | 3.75 | 28.2 | 0.399 | 0.402 | $10^7<$ | $10^7<$ | 55.8 | 19.3 | acidic, strong acidic flavor |
| | 3 | 50.9 | 5.78 | 3.72 | 27.3 | 0.394 | 0.399 | $7.9 \times 10^4$ | $5.1 \times 10^4$ | 51.5 | 12.3 | bitter |
| | 4 | 51.6 | 5.80 | 4.41 | 28.0 | 0.399 | 0.402 | $1.8 \times 10^4$ | $1.9 \times 10^4$ | 51.3 | 12.1 | somewhat not yet aged flavor |
| | 5 | 48.6 | 5.73 | 5.11 | 26.9 | 0.406 | 0.413 | $2.6 \times 10^3$ | $1.7 \times 10^3$ | 52.0 | 12.5 | somewhat not yet aged flavor |
| | 6 | 50.9 | 5.80 | 3.92 | 28.5 | 0.403 | 0.404 | $1.5 \times 10^4$ | $1.6 \times 10^4$ | 49.2 | 12.0 | bitter |

0 047 801

TABLE IV (Continued)

| aging days | example No. | water content (%) | pH | alcohol (%) | color measured | | | general live funguses | live acidic fungus | percentage of dissolved nitrogen | percentage of decomposed nitrogen | characteristics |
|---|---|---|---|---|---|---|---|---|---|---|---|---|
| | | | | | Y% | x | y | | | | | |
| 22 | control example (C) | 50.5 | 4.40 | 3.32 | 26.5 | 0.398 | 0.407 | $8.3 \times 10^7$ | $6.6 \times 10^7$ | 67.1 | 26.3 | acidified |
| | 3 | 50.3 | 5.70 | 3.42 | 24.2 | 0.380 | 0.362 | $3.1 \times 10^4$ | $1.3 \times 10^4$ | 61.4 | 20.9 | good taste, bitter |
| | 4 | 50.4 | 5.67 | 3.78 | 23.9 | 0.375 | 0.352 | $2.6 \times 10^3$ | $2.0 \times 10^3$ | 60.7 | 19.3 | good taste, somewhat bitter |
| | 5 | 47.5 | 5.78 | 5.14 | 23.7 | 0.378 | 0.351 | $10^3 <$ | $10^3 <$ | 63.4 | 19.6 | good taste, somewhat bitter |
| | 6 | 50.0 | 5.70 | 3.73 | 23.7 | 0.412 | 0.382 | $6.8 \times 10^4$ | $4.1 \times 10^4$ | 61.5 | 19.8 | good taste, bitter |
| 37 | control example (C) | 50.8 | 4.36 | 3.70 | 27.3 | 0.419 | 0.404 | $3.2 \times 10^7$ | $1.5 \times 10^7$ | 69.4 | 29.9 | acidified |
| | 3 | 51.4 | 5.20 | 3.68 | 17.2 | 0.442 | 0.388 | $1.1 \times 10^3$ | $1.0 \times 10^3$ | 63.4 | 25.8 | excellent taste |
| | 4 | 50.4 | 5.25 | 4.50 | 16.5 | 0.481 | 0.343 | $3.6 \times 10^2$ | $3.0 \times 10^2$ | 62.2 | 24.1 | good taste |
| | 5 | 47.5 | 5.56 | 5.32 | 14.9 | 0.457 | 0.381 | $10^2 <$ | $1.2 \times 10$ | 63.4 | 24.3 | appreciably good taste |
| | 6 | 50.3 | 5.35 | 3.56 | 17.3 | 0.440 | 0.373 | $2.3 \times 10^2$ | $2.0 \times 10^2$ | 62.4 | 25.1 | excellent taste |

0 047 801

**0 047 801**

As can be noted from Table IV, where the rice malt was immersed in alcohol (Examples 3, 4 and 5) and where the alcohol was sprinkled (Example 6), the number of general live funguses and of the live acidic funguses is much smaller than that of the control example (C) wherein alcohol was incorporated only at the time of admixing the ingredients. In addition, the control example (C) was completely acidified on the 11th day of the aging but in the Examples 3—6 of this invention the mixture was aged satisfactory.

About 25% of nitrogen decomposition is sufficient but it is considered that this value could be increased with larger aging days.

### Example 7

4 kg of rice malt was dipped for one hour in 4 l of 93.5% alcohol. Then, the malt was taken out of the alcohol at which time the alcohol content of the malt was about 20% by weight. The malt dipped in alcohol was put into a steel container having a capacity of 100 l wherein 15 kg of soya beans which had been cooled to a temperature of about 35°C after boiling or steaming was put. The malt and the soya beans were admixed with an agitator. At the end of this step, the temperature of the mixture was 30°C.

Thereafter, the mixture was transferred into a polyvinyl chloride container having a capacity of 20 l, and maintained in a constant temperature room of 30°C to effect aging.

The water content, pH value, alcohol content, color, number of live funguses, holmol nitrogen content of the aged mixture were measured and its various characteristics were also tested respectively 0, 10, 20 and 31 days after initiating the aging step. The results are shown in the Table V.

### Example 8

The same process as in Example 7 was repeated except that 15 kg of boiled or steamed soya beans was changed to 15 kg of boiled or steamed adzuki beans. The same test and measurement as in Example 7 were made and results are also shown in Table V.

### Example 9

The same process as in Example 7 were repeated except that 15 kg of boiled or steamed soya beans was changed to 15 kg of boiled or steamed kidney beans. The same test and measurement as in Example 7 were made and results are also shown in Table V.

### Example 10

The same process as in Example 7 was repeated except that 15 kg of boiled or steamed soya beans was changed to 15 kg boiled or steamed green peas. The same test and measurement as in Example 7 were made and results are also shown in Table V.

11

TABLE V

| aging days | Example No. | water content (%) | pH | alcohol (%) | color measured | | | general live funguses | percentage of decomposed nitrogen (%) | characteristics |
|---|---|---|---|---|---|---|---|---|---|---|
| | | | | | Y (%) | x | y | | | |
| 0 | 7. | 52.6 | 6.27 | 4.03 | 33.0 | 0.404 | 0.390 | $4.2 \times 10^3$ | | |
| | 8 | 51.8 | 6.15 | 4.13 | 16.1 | 0.362 | 0.328 | $1.0 \times 10^3$ | | |
| | 9 | 50.8 | 6.07 | 3.97 | 24.0 | 0.377 | 0.351 | $1.1 \times 10^3$ | | |
| | 10 | 52.3 | 6.04 | 4.00 | 20.8 | 0.410 | 0.412 | $2.1 \times 10^3$ | | |
| 5 | 7 | 52.1 | 5.92 | 3.94 | 30.2 | 0.411 | 0.399 | | | |
| | 8 | 51.5 | 5.84 | 3.95 | 14.8 | 0.372 | 0.332 | | | |
| | 9 | 50.7 | 5.80 | 4.02 | 21.2 | 0.392 | 0.358 | | | |
| | 10 | 51.5 | 5.78 | 3.86 | 19.0 | 0.413 | 0.410 | | | |
| 10 | 7 | 51.6 | 5.76 | 4.13 | 28.8 | 0.412 | 0.399 | $6.8 \times 10^2$ | 12.5 | bitter |
| | 8 | 50.9 | 5.70 | 3.95 | 13.6 | 0.378 | 0.339 | $7.1 \times 10^2$ | 14.8 | somewhat bitter sweetness |
| | 9 | 50.0 | 5.67 | 4.00 | 19.3 | 0.393 | 0.361 | $2.8 \times 10^2$ | 12.1 | bitter |
| | 10 | 51.3 | 5.67 | 3.92 | 17.1 | 0.416 | 0.418 | $5.0 \times 10^2$ | 13.8 | somewhat bitter sweetness |

0 047 801

TABLE V (Continued)

| aging days | Example No. | water content (%) | pH | alcohol (%) | color measured | | | general live funguses | percentage of decomposed nitrogen (%) | characteristics |
|---|---|---|---|---|---|---|---|---|---|---|
| | | | | | Y(%) | x | y | | | |
| 16 | 7 | 51.1 | 5.68 | 3.76 | 27.0 | 0.421 | 0.397 | | 18.7 | good taste, bitter |
| | 8 | 50.4 | 5.65 | 3.70 | 12.5 | 0.392 | 0.339 | | 19.5 | good taste, sweetness |
| | 9 | 49.7 | 5.61 | 3.95 | 18.7 | 0.404 | 0.363 | | 16.7 | good taste, bitter |
| | 10 | 50.8 | 5.63 | 3.80 | 16.3 | 0.422 | 0.420 | | 18.9 | good taste, sweetness |
| 24 | 7 | 50.3 | 5.43 | 3.64 | 24.8 | 0.426 | 0.378 | $5.9 \times 10$ | 22.4 | excellent taste |
| | 8 | 50.1 | 5.40 | 3.72 | 12.2 | 0.398 | 0.346 | $6.6 \times 10$ | 23.3 | good taste, strong sweetness |
| | 9 | 49.4 | 5.41 | 3.77 | 17.8 | 0.410 | 0.366 | $7.8 \times 10$ | 20.3 | good taste, strong sweetness |
| | 10 | 50.5 | 5.40 | 3.72 | 16.0 | 0.428 | 0.418 | $1.0 \times 10^2$ | 23.0 | good taste, strong sweetness |

0 047 801

# 0 047 801

The tests were carried out by using soya beans as in Example 7 and by using beans having albumin content of 20% by weight as in Example 8, 9 and 10, in both of which number of live funguses was few and acidification or decomposition did not occur. From the view points of pH value and the percentage of nitrogen decomposition, the results of aging were desirable. With respect to various characteristics of the aged mixture, the results were desirable in Examples 8, 9 and 10 since the mixture included rich sugar.

From the results of the above tests, it has become apparent that sugar rich substances having albumin content of about 20% such as adzuki beans are utilizable as well as soya beans having albumin content of about 40%. In other words, not only beans such as soya beans, adzuki beans, kidney beans, peas, winged beans, but also algae such as chlorella, spirulina, and seaweeds can be utilized.

*Usefulness of the invention*

Some examples of the application of the albumin rich foodstuff material of this invention are as follows.

1. Mayonnaise

At present, deutoplasm capable of emulsifying is used as the raw material for preparing mayonnaise, but the deutoplasm contains about 1213 mg/100 g of cholesterol which is extremely higher than that of other foodstuffs, thus causing high blood pressure and arteriosclerosis. Where an emulsion of the albumin rich foodstuff raw material of this invention is substituted for the deutoplasm all raw materials utilized to prepare mayonnaise become vegetable.

The formulations of a conventional mayonnaise (No. 1), that utilizes as the deutoplasm the raw material of Example 1 of this invention (No. 2), and that utilizing only the raw material of Example 1 (No. 3) are shown in the following Table VI.

TABLE VI

| raw material | No. 1 | No. 2 | No. 3 |
|---|---|---|---|
| salad oil | 75% by weight | 75% by weight | 50% by weight |
| vinegar | 9% by weight | 9% by weight | 20% by weight |
| salt | 2% by weight | 2% by weight | 2% by weight |
| sugar | 2% by weight | 2% by weight | 2% by weight |
| sodium glutaminate | 0.1% by weight | 0.1% by weight | 0.1% by weight |
| European kneaded mustard | 0.9% by weight | 0.9% by weight | 0.9% by weight |
| deutoplasm | 11% by weight | 5.5% by weight | 0% by weight |
| albumin rich foodstuff raw material of Example 1 | 0% by weight | 5.5% by weight | 25% by weight |

The three types of the mayonnaise having the ingredients described above had substantially the same color and viscosity and their characteristics were measured according to the following conditions.

Number of panel members — 15

sampling — mayonnaise alone was sampled

method of grading — method of numbering (1 is most excellent, 2 is the next...)

14

The results of test are shown in the following Tables VII and VIII.

TABLE VII

| sample / panel | Type of mayonnaise | | |
|---|---|---|---|
| | No. 1 | No. 2 | No. 3 |
| 1 | 2 | 1 | 3 |
| 2 | 3 | 2 | 1 |
| 3 | 1 | 2 | 3 |
| 4 | 1 | 2 | 3 |
| 5 | 2 | 1 | 3 |
| 6 | 3 | 1 | 2 |
| 7 | 2 | 1 | 3 |
| 8 | 3 | 2 | 1 |
| 9 | 3 | 1 | 2 |
| 10 | 1 | 3 | 2 |
| 11 | 3 | 2 | 1 |
| 12 | 1 | 2 | 3 |
| 13 | 1 | 2 | 3 |
| 14 | 3 | 2 | 1 |
| 15 | 2 | 1 | 3 |
| Total | 31 | 25 | 34 |
| Average | 2.06 | 1.67 | 2.67 |

TABLE VIII

Determination of the Difference in the Usefulness

| comparison | $t_0$ | t(14 0.05) | t(14 0.01) |
|---|---|---|---|
| No. 1 — No. 2 | 1.205 | 2.145 | 2.977 |
| No. 1 — No. 3 | 0.450 | 2.145 | 2.977 |
| No. 2 — No. 3 | 2.469[+] | 2.145 | 2.977 |

[+]useful

As can be noted, type No. 2 has the most excellent taste and a difference in the usefulness can be noted between types No. 2 and 3. However, certain persons like No. 3 showed difference in taste.

2. Use as miso containing low quantity of salt.

Miso has been an important foodstuff for Japanese as a source of albumin, oil and salt. However, with recent change in taste, demand for miso is now decreasing.

15

Among a number of reasons may be mentioned a large quantity of salt contained in miso which is not suitable for taste of some of the Japanese. An average quantity of salt taken by a Japanese is said to be 10—15 g/day and one cup of miso soup contains about 2.5 g of salt. Miso contains a large quantity of albumin and amino acid necessary for Japanese. Accordingly, it is presently necessary to decrease the salt content for increasing demand.

Decrease in the salt quantity of miso increases the demand therefor for condiments and for treating foodstuffs. In the prior art miso containing less than 12% of salt is not suitable for storage but according to this invention it is possible to freely adjust the salt concentration. Low salt content miso was prepared by admixing the prior art miso containing 12.5% by weight of salt and the albumin rich foodstuff raw material containing no salt prepared by Example 1 according to the formulation shown in the following Table IX.

TABLE IX

| Sample | No. 1 | No. 2 | No. 3 | No. 4 | No. 5 | No. 6 | No. 7 |
|---|---|---|---|---|---|---|---|
| prior art miso | 100 | 88 | 80 | 72 | 64 | 56 | 48 |
| the foodstuff raw material of Example 1 | 0 | 12 | 20 | 28 | 36 | 44 | 52 |
| salt content | 12.5% | 11% | 10% | 9% | 8% | 7% | 6% |

The low salt content miso thus prepared had substantially the same appearance as the commercially available prior art miso.

The characteristics of samples 1—7 were tested in the following manner.

Number of panel members        15 housewives

method of sampling

Miso soup was prepared in a conventional manner by using 20 g of the low salt-containing miso, 140 ml of water, a small quantity of condiments, and a suitable quantity of bean curds and wakame seaweed (undaria pinnatifida) and each member tasted the miso sauce.

method of grading

Graded according to numbers, that is 1 (good), 2 (normal) and 3 (bad).

The results are shown in the following Tables X and XI.

**0 047 801**

TABLE X

| panel \ sample | No. 1 | No. 2 | No. 3 | No. 4 | No. 5 | No. 6 | No. 7 |
|---|---|---|---|---|---|---|---|
| 1 | 3 | 3 | 1 | 1 | 1 | 1 | 2 |
| 2 | 3 | 3 | 1 | 2 | 2 | 3 | 3 |
| 3 | 3 | 3 | 3 | 1 | 2 | 2 | 3 |
| 4 | 2 | 2 | 2 | 2 | 1 | 2 | 2 |
| 5 | 1 | 1 | 2 | 2 | 2 | 3 | 3 |
| 6 | 3 | 3 | 2 | 2 | 1 | 2 | 3 |
| 7 | 3 | 1 | 1 | 1 | 1 | 2 | 2 |
| 8 | 2 | 2 | 2 | 1 | 1 | 1 | 1 |
| 9 | 2 | 3 | 2 | 2 | 1 | 3 | 3 |
| 10 | 3 | 2 | 2 | 2 | 1 | 2 | 2 |
| 11 | 3 | 3 | 2 | 1 | 2 | 2 | 3 |
| 12 | 2 | 2 | 1 | 1 | 1 | 1 | 3 |
| 13 | 2 | 1 | 3 | 3 | 3 | 3 | 3 |
| 14 | 3 | 2 | 2 | 1 | 2 | 2 | 2 |
| 15 | 3 | 3 | 2 | 2 | 2 | 2 | 3 |
| Total | 38 | 34 | 28 | 24 | 23 | 31 | 38 |
| Average | 2.53 | 2.27 | 1.87 | 1.60 | 1.53 | 2.07 | 2.53 |

17

### TABLE XI

### Determination of the Difference in the Usefulness

| comparison | $t_o$ | t(14 0.05) | t(14 0.01) |
|---|---|---|---|
| No. 1 — No. 2 | 1.428 | 2.145 | 2.977 |
| No. 1 — No. 3 | 2.575[+] | 2.145 | 2.977 |
| No. 1 — No. 4 | 3.388[++] | 2.145 | 2.977 |
| No. 1 — No. 5 | 4.021[++] | 2.145 | 2.977 |
| No. 1 — No. 6 | 1.648 | 2.145 | 2.977 |
| No. 1 — No. 7 | 0 | 2.145 | 2.977 |
| No. 2 — No. 3 | 1.411 | 2.145 | 2.977 |
| No. 2 — No. 4 | 2.247[+] | 2.145 | 2·977 |
| No. 2 — No. 5 | 2.492[+] | 2.145 | 2.977 |
| No. 2 — No. 6 | 2.650 | 2.145 | 2.977 |
| No. 2 — No. 7 | 1.135 | 2.145 | 2.977 |
| No. 3 — No. 4 | 1.426 | 2.145 | 2.977 |
| No. 3 — No. 5 | 2.008 | 2.145 | 2.977 |
| No. 3 — No. 6 | 0.971 | 2.145 | 2.977 |
| No. 3 — No. 7 | 3.427[++] | 2.145 | 2.977 |
| No. 4 — No. 5 | 0.358 | 2.145 | 2.977 |
| No. 4 — No. 6 | 3.424[++] | 2.145 | 2.977 |
| No. 4 — No. 7 | 4.653[++] | 2.145 | 2.977 |
| No. 5 — No. 6 | 2.729[+] | 2.145 | 2.977 |
| No. 5 — No. 7 | 5.754[++] | 2.145 | 2.977 |
| No. 6 — No. 7 | 2.729[+] | 2.145 | 2.977 |

[+]there is difference in the usefulness.

[++]there is remarkable difference in the usefulness.

These Tables show that sample No. 5 (salt content 8%) has more excellent characteristics and is more useful than samples other than samples No. 3 and No. 4.

A storage test of the low salt content was carried out in the following manners.

The albumin rich foodstuff raw material according to Example 1 and commercially available prior art miso were mixed together at a ratio of 37:63 to obtain low salt content miso and 500 g thereof was contained in a small bag consisting of a mixture consisting of 20 parts of OPP 17 parts of Epar (Registered Trade Mark) and 50 parts of polyethylene to prepare a sample 1. As a control, 500 g of the prior art miso was contained in a similar small bag to obtain a sample 2.

These samples were maintained in a constant temperature room held at 30°C, and the alcohol concentration, color, pH value and generation of $CO_2$ by the malt fungus were measured after 0, 10 and 30 days. The results of measurement are shown in the following Table XII.

# 0 047 801

## TABLE XII

| number of days stored | sample | salt (%) | water content (%) | alcohol (%) | pH | measured color | | | $CO_2$ generated |
|---|---|---|---|---|---|---|---|---|---|
| | | | | | | Y% | x | y | |
| 0 | 1 | 8.46 | 55.1 | 2.5 | 5.20 | 14.1 | 0.442 | 0.399 | |
| | 2 | 12.98 | 51.0 | 2.0 | 5.02 | 15.6 | 0.436 | 0.407 | |
| 10 | 1 | | | 2.7 | 5.10 | 11.7 | 0.453 | 0.398 | — |
| | 2 | | | 2.5 | 4.96 | 13.1 | 0.449 | 0.396 | — |
| 20 | 1 | | | 2.4 | 5.05 | 10.1 | 0.454 | 0.399 | — |
| | 2 | | | 2.2 | 4.95 | 11.1 | 0.466 | 0.388 | — |
| 30 | 1 | | | 2.7 | 5.08 | 8.0 | 0.460 | 0.398 | — |
| | 2 | | | 2.4 | 4.95 | 9.2 | 0.468 | 0.390 | — |

This Table shows that both the commercial miso and the low salt content miso have an excellent storage property as well as excellent characteristics. The taste is excellent which does not vary with the number of days stored. After 30 days (at 30°C) the low salt content miso had the same pH value and Y value and their tendency of varying is the same showing high storage capability.

The number of the general live funguses measured after 0 to 30 days is shown in the following Table XIII.

## TABLE XIII

| days | sample | number of general live funguses |
|---|---|---|
| 0 | 1 | $7.8 \times 10^2$ |
| | 2 | $2.4 \times 10^3$ |
| 30 | 1 | $7.1 \times 10^2$ |
| | 2 | $3.0 \times 10^3$ |

As this Table XIII shows, the number of the live funguses of the low salt content miso is of the order of $10^2$ and does not vary even after 30 days showing that there is no fear of acidification and decomposition.

3. Use of the foodstuff raw material of this invention as treated raw material

Since in the albumin rich foodstuff raw material of this invention, the soya bean albumin is decomposed by the enzymes of the malt to increase digestibility and taste it is suitable to use it as raw material for preparing confectionaries, soup condiments or other foodstuffs. For example, cookies may be prepared according to the formulations as shown in the following Table XIV.

19

**0 047 801**

TABLE XIV

| raw material | formulation 1 | formulation 2 |
|---|---|---|
| albumin rich foodstuff raw material according to Ex. 1 | 50 g | 0 |
| flour | 50 g | 100 g |
| butter | 40 g | 40 g |
| sugar | 27 g | 27 g |
| baking powder | 1 g | 1 g |
| salt | 0.5 g | 0.5 g |
| water | 23 cc | 23 cc |

Mixtures according to the formulations 1 and 2 were baked at a temperature of 180°C for 20 minutes. The cookie utilizing the formulation 1 had an excellent flavor and taste. The cookie utilizing the formulation 2, which has the flavor of the flour was not tasted as good as that utilizing composition 1.

4. Utilization of the albumin rich foodstuff raw material in form of powder.

The albumin rich foodstuff raw material of this invention is less water absorbent so that it is not easily denatured. Accordingly, its powder can be widely used as albumin rich foodstuff as the raw material for preparing instant foodstuffs, condiments and the like. For example, to use the powder to prepare soup the following formulation can be used.

| | |
|---|---|
| Flour | 12 g |
| butter | 13 g |
| the powder of this invention | 15 g |
| deoiled milk powder | 30 g |
| water | 400 cc. |

The soup thus prepared tastes good and does not require any other condiments, and is more excellent than commercially available instant potage.

5. Utilization as a high amino acid containing raw material

Since the albumin rich foodstuff raw material of this invention contains a large quantity of amino acid, it can be used as amino acid liquid as raw material for preparing sauce and dressing.

6. Utilization as the raw material for preparing albumin rich high calorie foodstuffs.

Since the albumin rich foodstuff raw material contains a large quantity of soya bean albumin and vegetable oil it can be utilized to improve nutritious value. However, when it is admixed with cheese, butter or almond it is possible to prepare albumin rich high calorie foodstuffs.

7. Utilization as a foodstuff for preventing and recovering such diseases as high blood pressure, arteriosclerosis, kidney and heart diseases

As the product of this invention contains a large quantity of linoleic acid and linolenic acid it is effective to prevent deposition of cholesterol. Moreover as the foodstuff raw material this invention does not contain salt it is useful to prevent and remedy these diseases.

**Claims**

1. A method for manufacturing albumin rich foodstuff raw material in the absence of salt by admixing

20

grain malts, vegetable albumin rich substances, comprising beans, seaweeds and algae, and ethyl alcohol, characterized in sterilizing grain malts by immersing the same in ethyl alcohol or an aqueous solution thereof having a concentration of at least 15% alcohol, mixing the sterilized malt with the steamed or boiled vegetable-albumin rich substances, adding an additional quantity of ethyl alcohol to form a mixture containing said ethyl alcohol present in said mixture in an amount less than 5% by weight based on the combined weight of the malt and the vegetable-albumin rich substances and aging the resulting mixture.

2. The method according to claim 1, wherein said aging is carried out at a temperature of from 20°C to 50°C.

3. The method according to claim 1 or 2, wherein the additional quantity of ethyl alcohol or an aqueous solution thereof is incorporated when malt and steamed vegetable-albumin rich substances are mixed together.

4. The method according to claim 1 or 2, wherein ethyl alcohol or an aqueous solution thereof is incorporated into the malt.

**Patentansprüche**

1. Verfahren zur Herstellung eines albuminreichen Nahrungsmittelausgangsstoffs in Abwesenheit von Salz durch Vermischen von Malzkörnern, albuminreichen pflanzlichen Stoffen, wie Bohnen, Meerespflanzen und Algen, und Ethylalkohol, dadurch gekennzeichnet, daß man die Malzkörner durch Eintauchen in Ethylalkohol oder in eine wässerige Lösung davon mit einem Alkoholgehalt von mindestens 15% sterilisiert, das sterilisierte Màlz mit den gedünsteten oder gekochten albuminreichen pflanzlichen Stoffen vermischt, eine zusätzliche Menge an Ethylalkohol zugibt, um ein Gemisch zu erhalten, worin die Alkoholmenge weniger als 5 Gew.-%, bezogen auf das Gesamtgewicht von Malz und albuminreichen pflanzlichen Stoffen, beträgt, und anschließend das erhaltene Gemisch reifen läßt.

2. Verfahren nach Anspruch 1, wobei das Reifen bei einer Temperatur von 20 bis 50°C erfolgt.

3. Verfahren nach einem der Ansprüche 1 oder 2, wobei die zusätzliche Menge an Ethylalkohol oder einer wässerigen Lösung davon bei der Vermischung von Malz und den gedünsteten albuminreichen pflanzlichen Stoffen zugegeben wird.

4. Verfahren nach einem der Ansprüche 1 oder 2, wobei der Ethylalkohol oder die wässerige Lösung davon in das malz eingebracht wird.

**Revendications**

1. Un Procédé de préparation de matière première alimentaire riche en albumine en l'absence de sel, en mélangeant des malts de grains, des substances végétales riches en albumine comprenant haricots, plantes marines et algues et de l'alcool éthylique, caractérisé en ce que l'on stérilise les malts de grains par immersion de ceux-ci dans l'alcool éthylique ou dans une solution aqueuse de celui-ci ayant une concentration d'au moins 15% en alcool, on mélange le malt stérilisé avec les substances végétales riches en albumine bouillies ou étuvées, on ajoute une quantité supplémentaire d'alcool éthylique pour former un mélange contenant cet alcool éthylique présent dans ledit mélange en quantité inférieur à 5% en poids par rapport au poids total du malt et des substances végétales riches en albumine et l'on fait mûrir le mélange qui en résulte.

2. Le Procédé selon la revendication 1, dans lequel cette maturation est mise en oeuvre à une température de 20 à 50°C.

3. Le Procédé selon la revendication 1 ou 2, dans lequel la quantité supplémentaire d'alcool éthylique ou d'une solution aqueuse de celui-ci est incorporée lorsque le malt et les substances végétales étuvées riches en albumine sont mélangés ensemble.

4. Le Procédé selon la revendication 1 ou 2, dans lequel l'alcool éthylique ou une solution aqueuse de celui-ci est incorporé dans le malt.